# EUROPÄISCHE PATENTSCHRIFT

(11) **EP 1 636 011 B1**
(45) Veröffentlichungstag und Bekanntmachung des Hinweises auf die Patenterteilung: **09.05.2007**
(21) Anmeldenummer: 04721482.0
(22) Anmeldetag: 18.03.2004
(51) Int. Cl.: B29C 47/16

(54) **EXTRUSIONSDÜSE MIT ZUMINDEST EINEM FLEXIBLEN LIPPENELEMENT**
EXTRUSION DIE HAVING AT LEAST ONE FLEXIBLE LIP ELEMENT
TUYERE D'EXTRUSION COMPRENANT AU MOINS UN ELEMENT LEVRE SOUPLE

(30) Priorität: 20.06.2003 DE 10328104
(43) Veröffentlichungstag der Anmeldung: 22.03.2006
(73) Patentinhaber: Breyer GmbH Maschinenfabrik, 78224 Singen (DE)
(72) Erfinder: VOGELBACHER, Gerhard, 78224 Singen (DE); BARTHEL, Hubertus, 78269 Volkertshausen (DE); PHAM, Van, Thinh, 78463 Konstanz (DE)
(74) Vertreter: Weiss, Peter
(86) Internationale Anmeldenummer: PCT/EP2004/002782
(87) Internationale Veröffentlichungsnummer: WO 2004/113051

(56) Entgegenhaltungen:
- US-A- 3 067 464
- US-A- 5 511 962
- US-B1- 6 663 375
- PATENT ABSTRACTS OF JAPAN Bd. 2002, Nr. 02, 2. April 2002 (2002-04-02) & JP 2001 293767 A (TOSHIBA MACH CO LTD), 23. Oktober 2001 (2001-10-23)
- PATENT ABSTRACTS OF JAPAN Bd. 0142, Nr. 09 (M-0968), 27. April 1990 (1990-04-27) & JP 2 047030 A (SUMITOMO HEAVY IND LTD), 16. Februar 1990 (1990-02-16)

## Beschreibung

Vorliegende Erfindung betrifft eine Extrusionsdüse mit zumindest einem flexiblen Lippenelement, zum Ausbringen von extrudiertem Material aus einem Spalt dessen Fliesquerschnitt veränderbar ist.

Herkömmliche Extrusionsdüsen sind in vielfältiger Form und Ausführung auf dem Markt bekannt und erhältlich. Bspw. wird auf die US 5,494,429 verwiesen, die eine Extrusionsdüse zum Extrudieren von thermoplastischen Materialien beschreibt.

Eine Extrusionsdüse mit zumindest einem flexiblen Lippenelement geht auch aus der EP 0668 143 A1 hervor. Dort wird über einen Exzenter eine Biegeleiste gegenüber einer Schräge des Düsenkörpers verschoben, um einen Austrittsbereich des Lippenelementes zu verändern.

Nachteilig hierbei ist, dass hohe Kräfte erforderlich sind, um die Biegeleiste gegenüber dem Düsenkörper zu verschieben, insbesondere verursacht durch hohe Reibung.

Zudem kann eine Biegung oder eine derartige Biegeleiste sowie dessen Exzenter spielbehaftet sind, was unerwünscht ist.

Die US 6,663,375 beschreibt eine Extrusionsdüse, bei welcher über eine Vielzahl nebeneinander angeordneter Hebelelemente ein Düsenquerschnitt veränderbar ist. Dabei wird eine Kraftübertragung von jedem Hebelelement über ein zweites damit verbundenes gelenkbewegbares Hebelelement in den Düsenkörper eingeleitet. Eine Verbindungsschiene verbindet jeweils ein langes mit einem kurzen Hebelelement. Die Kraftübertragung erfolgt rein über die Hebelelemente.

Die US 3,067,464 offenbart einen Verstellmechanismus für eine Extrusionsdüse, bei welcher über mehrere Exzenter, die einzeln mittels Schrauben zu bedienen sind, ein Schlitz einer Düse veränderbar ist.

Einfache mechanische Hebelelemente sind aus den Patent Abstracts of Japan Bd. 2002, Nr. 02 vom 02.04.2002 & JP 2001 293767 A sowie aus dem Patent Abstracts of Japan, Bd. 0142, Nr. 09 vom 27.04.1990 & JP 2 047030 A beschrieben.

Der vorliegenden Erfindung liegt daher die Aufgabe zugrunde, eine Extrusionsdüse der eingangs genannten Art zu schaffen, welche die genannten Nachteile beseitigt, und mit welcher auf einfache und kostengünstige Weise eine exakte Veränderung einer Spalthöhe bzw. eines Spaltes einer Extrusionsdüse bestehend aus zwei Lippenelementen möglich ist.

Dabei soll eine homogene Veränderung einer Spalthöhe über eine vollständige Breite möglich sein. Zudem sollen geringe Betätigungskräfte zum flexiblen Bewegen des Lippenelementes zur Änderung einer Spalthöhe erforderlich sein. Zudem sollen Fertigungs- und Wartungskosten sowie Herstellungskosten von Betätigungselementen erheblich reduziert werden.

Zur Lösung dieser Aufgabe führt, dass das zumindest eine flexible Lippenelement mit einer Mehrzahl von gemeinsam betätigbaren Hebelelementen gegenüber den anderen Lippenelement bewegbar ist, wobei die Mehrzahl von Hebelelementen in einer Nut im Austrittsbereich einends gelagert sind und andernends im Düsenkörper oder einem diesen zugeordneten Halteelement in einem Schlitten verschwenkbar eingreifen, wobei der Schlitten gegenüber dem Düsenkörper und/oder dem Halteelement abgestützt ist.

Bei der vorliegenden Erfindung hat sich als besonders vorteilhaft erwiesen, über eine vollständige Breite zwischen einem Austrittsbereich und einem Düsenkörper und einem dazwischenliegenden Biegebereich eine Mehrzahl von Hebelelemente anzuordnen, welche im Austrittsbereich des Düsenkörpers verschwenkbar gelagert sind. Im gegenüberliegenden Düsenkörper sind die Hebelelemente, welche parallel zueinander angeordnet sind, in einem Schlitten ebenfalls gelenkig gelagert, wobei der Schlitten in einer Ausnehmung des Düsenkörpers oder eines separaten Halteelementes gelagert und abgestützt ist.

Bei einer leicht winkeligen Anordnung lässt sich je nach Betätigen des Schlittenelementes durch die Betätigungshebel der Austrittsbereich gegenüber dem Düsenkörper verbiegen, so das die Spalthöhe zwischen dem gegenüberliegenden Lippenelement verkleinerbar oder vergrösserbar ist.

Auf diese Weise kann Einfluss genommen werden, auf unterschiedlich dick herzustellende Folien oder Platten, so dass mit ein und derselben Extrusionsdüse eine Vielzahl von unterschiedlichen Produkten in unterschiedlichen Dicken hergestellt werden können. Dabei ist eine Umstellung wesentlich erleichtert, in dem über entsprechende Betätigungselemente lediglich der Schlitten gegenüber dem Grundkörper oder einem Halteelement bewegt werden muss, um die Hebelelemente zu betätigen, um eine Spalthöhe zu verändern. Dies soll ebenfalls im Rahmen der vorliegenden Erfindung liegen.

Weiter Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte und zumindest teilweise aufgeschnittene Seitenansicht auf eine Extrusionsdüse mit zwei flexiblen Lippenelementen;
Figur 2 eine schematisch dargestellte, zumindest teilweise aufgeschnittene Seitenansicht eines weiteren Ausführungsbeispiels einer weiteren Extrusionsdüse gemäss Figur 1;
Figur 3 eine schematisch dargestellte Draufsicht eines Teils eines flexiblen Lippenelementes, insbesondere im Bereich von erfindungsgemässen Hebelelementen;
Figur 4 eine schematisch dargestellte querschnittliche Darstellung eines flexiblen Lippenelementes, insbesondere im Bereich der erfindungsgemässen Hebelelemente und des Schlittens.

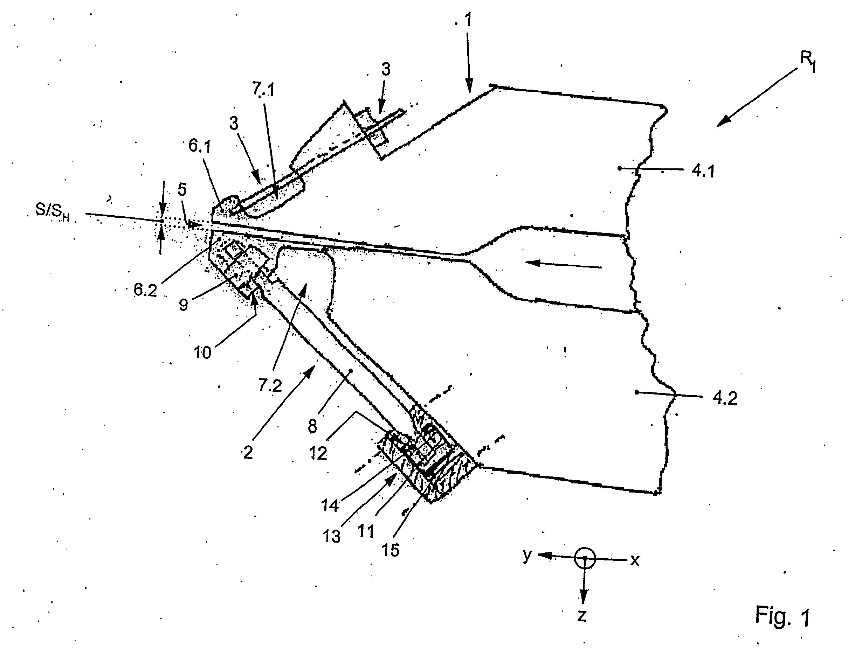

Gemäss Figur 1 weist eine erfindungsgemässe Extrusionsdüse R₁ ein erstes oberes flexibles Lippenelement 1 auf, welches mit einem zweiten unteren flexiblen Lippenelement 2 zusammenwirkt und zwischen den beiden Lippenelementen 1, 2 ein über die vollständige Breite laufender Spalt S gebildet ist.

Um dessen Fliessquerschnitt in die vollständige, hier nicht näher dargestellte, Breite des Lippenelementes 1 auszugleichen bzw. zu justieren, sind dem oberen flexiblen Lippenelement 1 eine Mehrzahl von nebeneinander angeordnete Stellglieder 3 zugeordnet, die über den entsprechenden Ort, über die vollständige Breite, eine manuelle Feinjustierung, insbesondere einen Ausgleich des flexiblen Lippenelementes 1 zulassen.

Im wesentlichen ist das Lippenelement 1 aus einem Düsenkörper 4.1 gebildet, wobei in einem Bereich einer Spaltöffnung 5 ein Austrittsbereich 6.1 gebildet ist, wobei zwischen dem Düsenkörper 4.1 und dem Austrittsbereich 6.1 vorzugsweise im Bereich oder nahe der Spaltöffnung 5 ein verjüngter Biegebereich 7.1 gebildet ist.

Zur Bildung eines parallelen Fliessquerschnittes ist gegenüberliegend ein erfindungsgemässes zweites flexibles Lippenelement 2 angeordnet, welches ebenfalls einen Düsenkörper 4.2 aufweist, wobei nahe der Spaltöffnung 5 ein Austrittsbereich 6.2 gebildet ist. Zwischen dem Austrittsbereich 6.2 und dem Düsenkörper 4 ist ein verjüngt ausgebildeter Biegebereich 7.2 vorgesehen.

Erfindungsgemäss ist bei der vorliegenden Erfindung das flexible Lippenelement 2 mit einer Mehrzahl von gemeinsam betätigbaren Hebelelementen 8 bestückt, die insbesondere den Biegebereich 7.2 überbrücken.

Im Austrittsbereich 6.1 sind über die vollständige Breite die jeweils zueinander geringfügig beabstandeten Hebelelemente 8 über hier nur angedeutete Bolzen 9 gelagert, wobei die Hebelelemente 8 einseits in eine Nut 10 eingreifen.

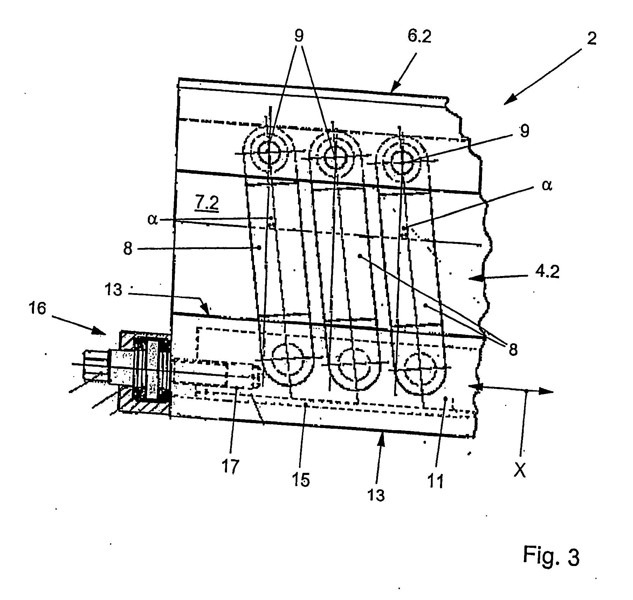

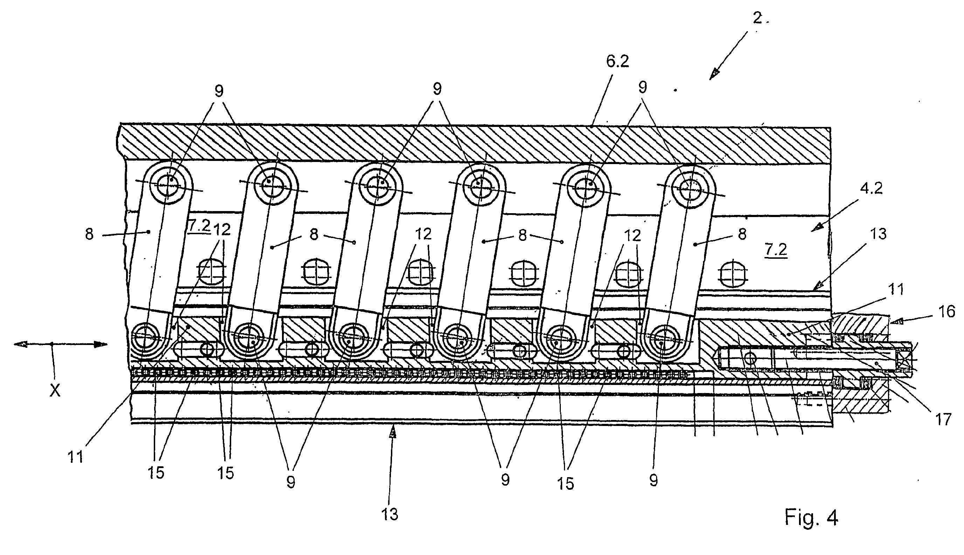

Andernends greifen die Hebelelemente 8, wie sie bspw. in den Figuren 3 und 4 aufgezeigt sind, in einen Schlitten 11 ein und sind dort in hier nur angedeuteten Ausnehmungen 12 des Schlittens 11 um einen Winkel α, siehe Figur 3, verschwenkbar gelagert.

Der Schlitten 11 ist in einem Halteelement 13, siehe Figur 1, linear in einer dargestellten X-Richtung gegenüber dem Halteelement 13 hin- und herverschiebbar gelagert.

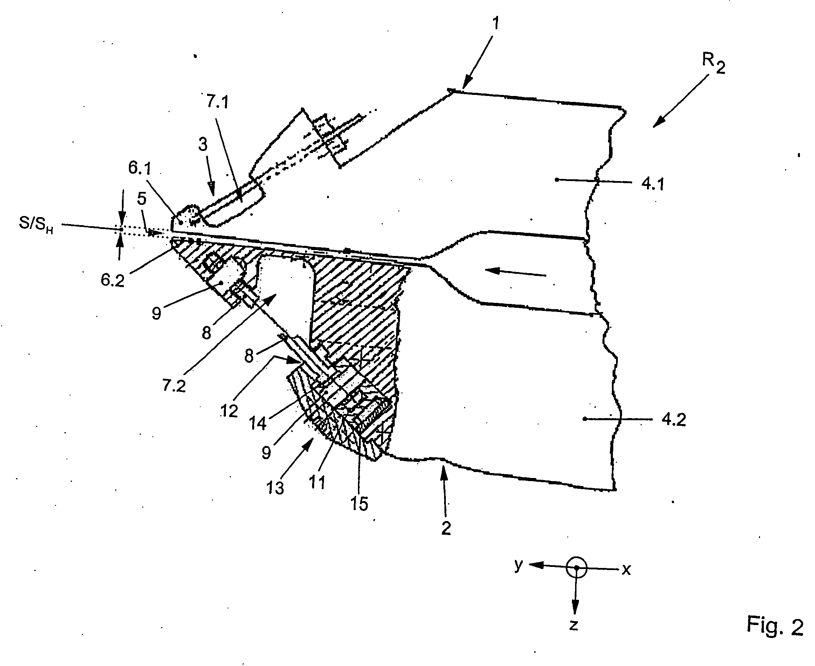

Das Halteelement 13 kann an den Düsenkörper 4.2 wiederlösbar festlegbar sein, wie es in Figur 1 angedeutet ist. Es ist jedoch auch denkbar, wie es insbesondere in dem Ausführungsbeispiel einer Extrusionsdüse R₂ gemäss Figur 2 aufgezeigt ist, das Halteelement 13 im Düsenkörper 4.2 zu integrieren, wobei im Düsenkörper 4.2 eine entsprechende Ausnehmung 12 zur Aufnahme des Schlittens 11 vorgesehen ist, in welchem die Hebelelemente 8 gelagert sind. Über entsprechende hier nur angedeutete Lagerelemente 14, 15 ist der Schlitten 11 in Zug- und/oder Druckrichtung der Hebelelemente 8 im Halteelement 13 abgestützt bzw. gelagert. Vorzugsweise werden als Lagerelemente 14, 15 Nadelrollenlager od. dgl. verwendet.

Um den Schlitten 11 in dargestellter X-Richtung hin und her zu bewegen, um die Hebelelemente 8, die vorzugsweise in geringen Abständen zueinander über die vollständige Breite des Lippenelementes 2 angeordnet sind, ist dem Düsenkörper 4.2 ein Betätigungselement 16 zugeordnet, welches im bevorzugten Ausführungsbeispiel als Gewindespindel ausgebildet ist. Durch entsprechendes radiales Verdrehen einer Verstellspindel 17 wird der Schlitten 11 in X-Richtung hin oder her bewegt.

Die Verstellspindel 17 bzw. das Betätigungselement 16 lässt sich mit jeder beliebigen Antriebseinrichtung versehen, wobei im Rahmen der vorliegenden Erfindung liegen soll, dass entsprechende Hydraulikzylinder, Servomotoren, entsprechende Getriebe od. dgl. den Schlitten in dargestellter X-Richtung hin oder her bewegen können.

Von Vorteil ist bei der vorliegenden Erfindung, dass durch das Hin- und Herbewegen des Schlittens 11, der vorzugsweise präzise und genau über die Lagerelemente 14, 15 im Halteelement 13 gelagert ist, insbesondere bei einer winkeligen Anstellung der Hebelelemente 8, sich ein Spalt S des Lippenelementes 2 gegenüber dem Lippenelement 1 verändern lässt.

Diese Veränderung kann automatisch oder manuell vorgenommen werden, wobei dann insbesondere der Austrittsbereich 6.2 durch den verjüngten Biegebereich 7.2 gegenüber dem Düsenkörper 4.2 verbogen wird.

Für die Mehrzahl von nebeneinander angeordneten Hebelelementen 8 ist auf eine vollständige Breite der Extrusionsdüse eine homogene exakte Verstellung des Spaltes S zur Erzielung einer unterschiedlichen und wählbaren Spalthöhe S_{H} möglich.

Insbesondere können durch die Mehrzahl von Hebelelementen 8 sehr hohe Biegekräfte zur Verformung des Austrittsbereiches 6.2 des Lippenelementes 2 über die vollständige Breite des Lippenelementes 2 realisiert werden. Zudem werden durch die entsprechende Hebelanordnung der Hebelelemente 8 und die optimierte Lagerung des Schlittens 11 die Kräfte für das Betätigungselement 16 reduziert, um eine exakte und präzise Verstellung, insbesondere Verbiegung des Austrittsbereiches 6.2 des Lippenelementes 2 zu gewährleisten.

Auf diese Weise lässt sich über die vollständige Breite sehr exakt und genau der Austrittsbereich 6.2 gegenüber dem Austrittsbereich 6.1 verändern, um eine Spalthöhe S_{H} für einen gewünschten Fliessquerschnitt einzustellen. Auf diese Weise lassen sich mit einer Düse unterschiedlich dicke Folien und/oder Platten herstellen, wobei lediglich über das manuell oder automatisch ansteuerbare Betätigungselement 16 ein Verstellen des Spaltes S sehr schnell erfolgt, ohne dass eine Produktion unterbrochen werden muss.

Es ist sogar denkbar, dass im Fertigungsprozess die Spaltbreite verändert, justiert oder zur Produktion eines anderen Produktes umgestellt werden kann. Dies soll ebenfalls im Rahmen der vorliegenden Erfindung liegen.

### Positionszahlenliste

| | | | | | |
|---|---|---|---|---|---|
| 1 | Lippenelement | 34 | | 67 | |
| 2 | Lippenelement | 35 | | 68 | |
| 3 | Stellglieder | 36 | | 69 | |
| 4 | Düsenkörper | 37 | | 70 | |
| 5 | Spaltöffnung | 38 | | 71 | |
| 6 | Austrittsbereich | 39 | | 72 | |
| 7 | Biegebereich | 40 | | 73 | |
| 8 | Hebelelemente | 41 | | 74 | |
| 9 | Bolzen | 42 | | 75 | |
| 10 | Nut | 43 | | 76 | |
| 11 | Schlitten | 44 | | 77 | |
| 12 | Ausnehmung | 45 | | 78 | |
| 13 | Halteelement | 46 | | 79 | |
| 14 | Lagerelement | 47 | | | |
| 15 | Lagerelement | 48 | | | |
| 16 | Betätigungselement | 49 | | R₁ | Extrusionsdüse |
| 17 | Verstellspindel | 50 | | R₂ | Extrusionsdüse |
| 18 | | 51 | | | |
| 19 | | 52 | | | |
| 20 | | 53 | | S | Spalt |
| 21 | | 54 | | SH | Spalthöhe |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Extrusionsdüse mit zumindest einem flexiblen Lippenelement (1, 2), zum Ausbringen von extrudiertem Material aus einem Spalt (S) dessen Fliesquerschnitt veränderbar ist,
wobei das zumindest eine flexible Lippenelement (2) mit einer Mehrzahl von gemeinsam betätigbaren Hebelelementen (8) gegenüber den anderen Lippenelement (1) bewegbar ist, **dadurch gekennzeichnet, dass** die Mehrzahl von Hebelelementen (8) in einer Nut (10) im Austrittsbereich (6.2) einends gelagert sind und andernends im Düsenkörper (4.2) oder einem diesen zugeordneten Halteelement (13) in einem Schlitten (11) verschwenkbar eingreifen, wobei der Schlitten (11) gegenüber dem Düsenkörper (4) und/oder dem Halteelement (13) abgestützt ist.

2. Extrusionsdüse nach Anspruch 1, **dadurch gekennzeichnet, dass** das flexible Lippenelement (2) zwischen einem Austrittsbereich (6.2) und einem Düsenkörper (4.2) einen verjüngten Biegebereich (7.2) aufweist, wobei die Mehrzahl der gemeinsam betätigbaren Hebelelemente (8) zwischen Austrittsbereich (6.2) und Düsenkörper (4.2) angeordnet sind.

3. Extrusionsdüse nach Anspruch 1 oder 2, **dadurch gekennzeichnet, dass** der Schlitten (11) in einer (X)-Richtung linear hin- und herbewegbar ist.

4. Extrusionsdüse nach wenigstens einem der Ansprüche 1 bis 3, **dadurch gekennzeichnet, dass** der Schlitten (11) mittels eines Betätigungselementes (16) in einer (X)- Richtung hin- und herbewegbar ist.

5. Extrusionsdüse nach Anspruch 4, **dadurch gekennzeichnet, dass** das Betätigungselement (16) als manuell betätigbare Antriebseinrichtung, insbesondere als Gewinde oder Spindel ausgebildet ist.

6. Extrusionsdüse nach Anspruch 4, **dadurch gekennzeichnet, dass** das Betätigungselement (16) als Getriebeelement, Servomotor, elektromechanischer Antriebseinrichtung, Hydraulikzylinder od. dgl. ausgebildet ist.

7. Extrusionsdüse nach wenigstens einem der Ansprüche 1 bis 6, **dadurch gekennzeichnet, dass** der Schlitten (11) in einer Ausnehmung (12) des Düsenkörpers (4.2) oder dessen Halteelement (13) gelagert ist.

8. Extrusionsdüse nach Anspruch 7, **dadurch gekennzeichnet, dass** der Schlitten (11) in der Ausnehmung (12) über eine Mehrzahl von Lagerelementen (14, 15), insbesondere Nadelrollenlager gelagert ist.

9. Extrusionsdüse nach wenigstens einem der Ansprüche 1 bis 8, **dadurch gekennzeichnet, dass** der Schlitten (11) linear bewegbar ist, und auf Zug- und/oder Druckbelastungen über eine Mehrzahl von Lagerelementen (14, 15) gelagert ist.

10. Extrusionsdüse nach wenigstens einem der Ansprüche 3 bis 9, **dadurch gekennzeichnet, dass** durch lineares Bewegen des Schlittens (11) in (X) -Richtung durch Verschwenken der Hebelelemente (8) um einen Winkel (α) eine Spalthöhe (S_{H}) des Fliesquerschnittes zwischen den jeweiligen gegenüberliegenden Lippenelementen (1, 2) veränderbar ist.

11. Extrusionsdüse nach wenigstens der Ansprüche 3 bis 10, **dadurch gekennzeichnet, dass** eine Mehrzahl von nebeneinander parallel zueinander angeordneten Hebelelemente (8) einends im dem flexiblen Lippenelement (2) verschwenkbar gelagert sind und andernends im Schlitten (11) zueinenander gleichmässig beabstandet gelagert sind, wobei das Schlittenelement (11) gegenüber dem Düsenkörper (4.2) oder einem Halteelement (13) linear in X-Richtung bewegbar abgestützt und gelagert ist.

12. Extrusionsdüse nach wenigstens einem der Ansprüche 1 bis 11, **dadurch gekennzeichnet, dass** das andere flexible Lippenelement (1) eine Mehrzahl über die vollständige Breite verlaufende Stellglieder (3) aufweist, um die das flexible Lippenelement (1) zwischen einem Austrittsbereich (6.1), einem verjüngten Bereich (7.1) und einem Düsenkörper (4.1) über die Breite ortsabhängig zur Einstellung eines parallelen gleichmässigen Spaltes (S) zu justieren.

## Claims

1. Extrusion die having at least one flexible lip element (1, 2), for discharging extruded material from a gap (S), the flow cross section of which is variable, wherein the at least one flexible lip element (2) is movable relative to the other lip element (1) by means of a plurality of jointly actuable lever elements (8), **characterized in that** the plurality of lever elements (8) are mounted at one end in a groove (10) in the outlet region (6.2) and engage at the other end pivotably in the die body (4.2) or a retaining element (13) associated therewith in a carriage (11), wherein the carriage (11) is supported relative to the die body (4) and/or the retaining element (13).

2. Extrusion die according to claim 1, **characterized in that** the flexible lip element (2) has a reduced bending region (7.2) between an outlet region (6.2) and a die body (4.2), wherein the plurality of jointly actuable lever elements (8) are disposed between outlet region (6.2) and die body (4.2).

3. Extrusion die according to claim 1 or 2, **characterized in that** the carriage (11) is movable linearly to and fro in a direction (X).

4. Extrusion die according to at least one of claims 1 to 3, **characterized in that** the carriage (11) is movable to and fro in a direction (X) by means of an actuating element (16).

5. Extrusion die according to claim 4, **characterized in that** the actuating element (16) takes the form of a manually actuable drive device, in particular a thread or spindle.

6. Extrusion die according to claim 4, **characterized in that** the actuating element (16) takes the form of a gear element, servomotor, electromechanical drive device, hydraulic cylinder or the like.

7. Extrusion die according to at least one of claims 1 to 6, **characterized in that** the carriage (11) is mounted in a recess (12) of the die body (4.2) or the retaining element (13) thereof.

8. Extrusion die according to claim 7, **characterized in that** the carriage (11) is mounted in the recess (12) by means of a plurality of bearing elements (14, 15), in particular needle roller bearings.

9. Extrusion die according to at least one of claims 1 to 8, **characterized in that** the carriage (11) is linearly movable, and is mounted under tension and/or compression by means of a plurality of bearing elements (14, 15).

10. Extrusion die according to at least one of claims 3 to 9, **characterized in that** by linearly moving the carriage (11) in direction (X) by pivoting the lever elements (8) through an angle (α) a gap height (S_{H}) of the flow cross section between the respective opposing lip elements (1, 2) is variable.

11. Extrusion die according to at least claims 3 to 10, **characterized in that** a plurality of lever elements (8) disposed alongside and parallel to one another are mounted at one end pivotably in the flexible lip element (2) and at the other end with uniform mutual spacing in the carriage (11), wherein the carriage element (11) is supported and mounted so as to be movable linearly in X-direction relative to the die body (4.2) or a retaining element (13).

12. Extrusion die according to at least one of claims 1 to 11, **characterized in that** the other flexible lip element (1) has a plurality of control elements (3) extending over the entire width for adjusting the the flexible lip element (1) between an outlet region (6.1), a reduced region (7.1) and a die body (4.1) over the width location-dependently for setting a parallel uniform gap (S).

## Revendications

1. Tuyère d'extrusion avec au moins un élément de lèvre flexible (1, 2), destinée à sortir du matériau extrudé d'un interstice (S) dont la section d'écoulement est variable,
l'au moins un élément de lèvre flexible (2) avec une pluralité d'éléments de levier (8) actionnables en commun étant déplaçable par rapport à l'autre élément de lèvre flexible (1),
**caractérisée par le fait que** la pluralité d'éléments de levier (8) sont montés, à une extrémité, dans une rainure (10) dans la zone de sortie (6.2) et, s'engagent, à l'autre extrémité, dans le corps de tuyère (4.2) ou dans un élément de retenue (13), associé à ce dernier, dans un coulisseau (11), le coulisseau (11) étant supporté par rapport au corps de tuyère (4) et/ou de l'élément de retenue (13).

2. Tuyère d'extrusion selon la revendication 1, **caractérisée par le fait que** l'élément de lèvre flexible (2) présente, entre une zone de sortie (6.2) et un corps de tuyère (4.2), une zone de flexion rétrécie (7.2), la pluralité d'éléments de levier (8) actionnables en commun étant disposés entre la zone de sortie (6.2) et le corps de tuyère (4.2).

3. Tuyère d'extrusion selon la revendication 1 ou 2, **caractérisée par le fait que** le coulisseau (11) est déplaçable linéairement en va-et-vient dans une direction (X).

4. Tuyère d'extrusion selon au moins l'une des revendications 1 à 3, **caractérisée par le fait que** le coulisseau (11) est déplaçable en va-et-vient dans une direction (X) au moyen d'un élément d'actionnement (16).

5. Tuyère d'extrusion selon la revendication 4, **caractérisée par le fait que** l'élément d'actionnement (16) est réalisé sous forme de dispositif d'entraînement actionnable manuellement, en particulier de filet ou de tige.

6. Tuyère d'extrusion selon la revendication 4, **caractérisée par le fait que** l'élément d'actionnement (16) est réalisé sous forme d'élément d'engrenage, de servomoteur, de dispositif d'entraînement électromécanique, de cylindre hydraulique ou autre.

7. Tuyère d'extrusion selon au moins l'une des revendications 1 à 6, **caractérisée par le fait que** le coulisseau (11) est monté dans un évidement (12) du corps de tuyère (4.2) ou de son élément de retenue (13).

8. Tuyère d'extrusion selon la revendication 7, **caractérisée par le fait que** le coulisseau (11) est monté dans l'évidement (12) par l'intermédiaire d'une pluralité d'éléments de roulement (14, 15), en particulier roulements à aiguilles.

9. Tuyère d'extrusion selon au moins l'une des revendications 1 à 8, **caractérisée par le fait que** le coulisseau (11) est déplaçable linéairement, et est monté, par l'intermédiaire d'une pluralité d'éléments de roulement (14, 15), de manière à permettre des sollicitations de traction et/ou de poussée.

10. Tuyère d'extrusion selon au moins l'une des revendications 3 à 9, **caractérisée par le fait que** par le déplacement linéaire du coulisseau (11) dans la direction (X) peut être variée, par pivotement des éléments de levier (8) suivant un angle (α), une hauteur d'interstice (S_{H}) de la section d'écoulement entre les éléments de lèvre (1, 2) opposés.

11. Tuyère d'extrusion selon au moins l'une des revendications 3 à 10, **caractérisée par le fait qu'**une pluralité d'éléments de levier (8) disposés adjacents, parallèles entre eux, sont montés, à une extrémité, de manière pivotable dans l'élément de lèvre flexible (2) et, à l'autre extrémité, équidistants entre eux dans le coulisseau (11), l'élément de coulisseau (11) étant supporté et monté de manière déplaçable linéairement dans la direction X par rapport au corps de tuyère (4.2) ou à un élément de retenue (13).

12. Tuyère d'extrusion selon au moins l'une des revendications 1 à 11, **caractérisée par le fait que** l'autre élément de lèvre flexible (1) présente une pluralité d'éléments de réglage (3) s'étendant sur la largeur totale, pour régler l'élément de lèvre flexible (1) entre une zone de sortie (6.1), une zone rétrécie (7.1) et un corps de tuyère (4.1) sur la largeur, en fonction de l'endroit, en vue du réglage d'un interstice uniforme parallèle (S).
